# EUROPÄISCHE PATENTSCHRIFT

(11) **EP 0 523 645 B1**
(45) Veröffentlichungstag und Bekanntmachung des Hinweises auf die Patenterteilung: **18.09.1996**
(21) Anmeldenummer: 92112030.9
(22) Anmeldetag: 15.07.1992
(51) Int. Cl.: H01H 36/00

(54) **Elektrischer Schalter**
Electrical switch
Interrupteur électrique

(30) Priorität: 16.07.1991 DE 4123480
(43) Veröffentlichungstag der Anmeldung: 20.01.1993
(73) Patentinhaber: EATON CONTROLS GmbH & Co. KG, D-55411 Bingen (DE)
(72) Erfinder: Butzbach, Karl F., W-6550 Bad Kreuznach (DE)
(74) Vertreter: Becker, Bernd, Dipl.-Ing.

(56) Entgegenhaltungen:
- DE-A- 1 640 830
- DE-A- 3 413 230
- DE-U- 6 605 612
- US-A- 3 579 159
- US-A- 3 980 980

## Beschreibung

Die Erfindung bezieht sich auf einen elektrischen Schalter mit einem in einem Gehäuse federbelastet geführten Betätigungsstößel und mit einem durch einen Permanentmagneten berührungslos beaufschlagbaren Schaltelement, das mit sich durch einen in das Gehäuse eingesetzten Sockel erstreckenden Anschlußkontakten verbunden ist, wobei der Permanentmagnet und das Schaltelement unter Bildung eines Freiraumes zwischen denselben an dem Sockel festgelegt sind, und der Betätigungsstößel mit seinem unteren, aus einem ferromagnetischen Material bestehenden Bereich in diesen Freiraum zur Änderung des Schaltzustandes des Schaltelementes verschiebbar ist. (DE-U-66 05 612)

Aus der DE 34 13 230 A1 ist ein elektrischer Schalter bekannt, bei dem das Schaltelement als Reedschaltampulle ausgebildet, die in einen rohrförmigen Einsatz des Schaltergehäuses eingeschoben ist. Die Kontaktzungen der Reedschaltampulle sind über Anschlußdrähte mit äußeren Kontaktfahnen des Schaltergehäuses verbunden. Der rohrförmige Einsatz weist einen verbreiterten Kopf auf, der in einer zur Rückseite offenen Gehäusekammer aufgenommen ist, in welcher sich mehrere Distanzringe zwischen dem Kopf des Einsatzes und einem die Gehäusekammer verschließenden Deckel befinden. Eine einen hohlen Schaft des rohrförmigen Einsatzes umgebende Schraubenfeder stützt sich mit ihrem einen Ende an einer zwischen dem Kopf und dem Schaft des Einsatzes gebildeten Ringschulter ab, während das andere Ende der Schraubenfeder an der Stirnfläche des Betätigungsstößels anliegt. Der in einer durchgehenden Axialbohrung des Gehäuses verschiebbar gelagerte, rohrförmige Stößel besitzt an seinem inneren Ende einen ringförmigen Absatz, auf den ein Ringmagnet aufgeschoben ist. Der Einsatz, der die Reedschaltampulle enthält, kann im Gehäuse durch Verlagerung der Distanzringe einzeln oder gruppenweise von der Rückseite des verbreiterten Kopfes des Einsatzes zu dessen Vorderseite hin feinstufig axial verstellt werden. Alternativ hierzu ist es auch möglich, den Einsatz mit dem Gehäuse zu verschrauben, wodurch eine genaue Positionierung desselben zwar stufenlos vorgenommen werden kann, jedoch muß hierbei eine zusätzliche Maßnahme zur Festlegung der endgültigen Position des Einsatzes getroffen werden. In beiden Fällen wird allerdings durch die Verstellbarkeit des Einsatzes im Gehäuse in Axialrichtung eine feinstufige Veränderung des Schaltpunktes bezogen auf den Stößelhub erreicht. Hierzu ist mindestens ein gesondertes Bauteil, nämlich der Einsatz, notwendig, was fertigungstechnisch aufwendig und damit kostenungünstig ist. Die gegebenenfalls zur Anwendung kommenden Distanzringe stellen weitere zusätzliche Bauteile dar, die den Montageaufwand des Schalters erhöhen. Weiterhin bedingt die Unterbringung der Reedschaltampulle in dem rohrförmigen Schaft des Einsatzes eine 180°-Umbiegung des oberen Anschlußdrahtes der Reedschaltampulle, was zu einer Beschädigung dieses Anschlußdrahtes führen kann. Weiterhin muß zur Aufnahme des Anschlußdrahtes in der Aufnahme des Anschlußdrahtes in der Aufnahmebohrung für die Reedschaltampulle im Schaft des rohrförmigen Einsatzes eine Axialnut vorgesehen sein, in die der Anschlußdraht exakt eingelegt werden muß.

Des weiteren ist aus dem DE-U-66 05 612 ein magnetfeldbetätigter Kontaktgeber mit zwei am einen Ende in ein geschlossenes Glasrohr eingeschmolzenen Schaltzungen bekannt, deren freie Enden sich überlappen und durch einen Dauermagneten steuerbar sind. Hierbei sitzt der im Bereich der sich überlappenden Schaltzungen angeordnete, etwa parallel zu diesen magnetisierte Dauermagnet im Abstand vom Glasrohr auf einer aus magnetisierbarem Werkstoff bestehenden Scheibe, die quer zu den Schaltzungen angeordnet ist und sich wenigstens annähernd bis zum Glasrohr erstreckt, wobei zwischen dem Glasrohr und dem Dauermagneten ein Teil aus magnetisierbarem Werkstoff entgegen der Kraft einer Rückführfeder entlang dem Glasrohr bis zur Anlage an der Scheibe bewegbar ist.

Der Erfindung liegt die Aufgabe zugrunde, einen elektrischen Schalter der eingangs genannten Art zu schaffen, der einfach und kompakt bei gleichzeitig gegebener hoher Ansprechgenauigkeit aufgebaut ist und die Montage sowie die Anschlußverbindung des Schaltelementes vereinfacht.

Diese Aufgabe wird erfindungsgemäß dadurch gelöst, daß der Boden des topfartig ausgeführten Sockels mittig in einen Schaft mit einer von außen zugänglichen Sackbohrung übergeht, in der der als Stabmagnet mit endseitiger Polarisierung ausgebildete Permanentmagnet mittels Klebstoff in einer einmalig einstellbaren Position gehalten ist.

Die Lösung nach der Erfindung gestattet es, den Magneten in Abhängigkeit von dem gewünschten Hub des Betätigungsstößels zur Beaufschlagung des Schaltelementes an dem Sockel zu befestigen, wodurch ein Schaltvorgang des Schaltelementes zuverlässig und stets an derselben Stelle erfolgt, d.h. der Einschaltpunkt ist genau festgelegt. Nach der Anbringung des Schalters an einem Bauteil mit einer zugehörigen, den Betätigungsstößel beaufschlagenden Schaltvorrichtung, beispielsweise an einem Kraftfahrzeuggetriebe mit einem auf den Betätigungsstößel des Schalters einwirkenden Schaltnocken, wird zunächst der Betätigungsstößel mit seinem unteren, ferromagnetischen Bereich in den Wirkbereich des Schaltelementes gefahren und anschließend wird der Magnet so an dem Sockel in seiner Lage positioniert, daß er eine Änderung des Schaltzustandes des Schaltelementes bewirkt. Damit ist ein genauer, reproduzierbarer Schaltpunkt bestimmt. Da kein zusätzliches, in axialer Richtung verstellbares Bauteil für die Einstellung des Schaltpunktes notwendig ist, ergibt sich zum einen ein äußerst kompakter Aufbau und zum anderen ein erleichterter Zusammenbau des Schalters. Die Befestigung von Magnet und Schaltelement am Sockel schließt Schalttoleranzen aus und ermöglicht eine problemlose Anschlußverbindung zwischen dem Schaltelement und den Anschlußkontakten.

Damit der in die Sackbohrung des Schaftes eingefüllte Klebstoff beim Einschieben des Permanentmagneten in die Sackbohrung seitlich ausweichen kann, ist bei einer vorteilhaften Weiterbildung des Erfindungsgegenstandes die Sackbohrung des Schaftes mit vier gleichmäßig über den Umfang verteilten Längsnuten versehen.

Zur Erleichterung der Positionierung des Magneten im eingebauten Zustand des Schalters ist zweckmäßigerweise der Permanentmagnet in einer vormontierten Stellung im Eingangsbereich der Sackbohrung durch Selbstklemmung und/oder punktuelle Klebung gehalten, wobei in der Sackbohrung der durch eine Siegelschicht abgedichtete Klebstoff angeordnet ist. Dies ermöglicht es, den Permanentmagneten durch einfaches Einschieben in die Sackbohrung in der gewünschten Stellung festzulegen.

Das Schaltelement ist bevorzugt als Hallgenerator, Reedschaltampulle oder dergleichen ausgeführt und auf einer an dem Sockel befestigten Leiterplatte angeordnet, deren Leiterbahnen über Kontaktschienen mit den Anschlußkontakten verbunden sind. Hierdurch ist sowohl das Schaltelement selbst als auch seine Verbindung mit den Anschlußkontakten äußerst störunanfällig. Zur Erzielung einer sicheren Halterung der Leiterplatte an dem Sockel sind nach einer vorteilhaften Weiterbildung der Erfindung an der Innenseite der Wand des Sockels zwei gegenüberliegende Längsvorsprünge mit jeweils einer durchgehenden Nut angeformt, in die die Leiterplatte eingeschoben ist.

Weiterhin ist bevorzugt vorgesehen, daß der Betätigungsstößel von seiner Unterseite her mit einer Sackbohrung versehen ist, in die der obere Bereich des Schaftes des Sockels eintaucht. Zweckmäßigerweise geht hierbei die Oberseite des Schaftes unter Bildung einer Ringschulter in einen Führungszapfen für eine Druckfeder über, die sich mit ihrem einen Ende an dieser Ringschulter und mit ihrem anderen Ende an dem Boden der Sackbohrung des Betätigungsstößels abstützt. Durch diese Maßnahmen wird insgesamt ein kompakter Aufbau des Schalters erreicht.

Zur Erzielung einer einfachen Begrenzung der Abwärtsbewegung des Betätigungsstößels sind nach einer weiteren Ausgestaltung der Erfindung an der Außenseite des Schaftes vom Boden des Sockels aus vier gleichmäßig über den Umfang verteilte Stege angeformt, deren Oberseite unterhalb des Schaltelementes liegt und als Anschlag für die Unterseite des niedergedrückten Betätigungsstößels dient. Zweckmäßigerweise weist der in einer durchgehenden Axialbohrung des Gehäuses gleitbeweglich geführte Betätigungsstößel eine Ringschulter auf, die durch ihre Anlage an der Innenseite des Gehäuses die Aufwärtsbewegung des Betätigungsstößels begrenzt.

Um den Innenraum des Schalters sicher gegen ein Eindringen von Feuchtigkeit und Schmutz zu schützen, ist bei einer vorteilhaften Weiterbildung der erfindungsgemäßen Lösung unterhalb der Ringschulter an dem Betätigungsstößel eine Ringnut vorgesehen, in die der Innenbereich einer kreisringförmigen Rollmembrane eingreift, während der Außenbereich der Rollmembrane zwischen der Oberseite der Wand des Sockels und der Innenseite des Gehäuses festgelegt ist. Bevorzugt ist hierbei in der Nähe des Bodens des Sockels in die Außenseite der Wand des Sockels eine Ringnut eingelassen, in die ein an der Innenseite des Gehäuses anliegender Runddichtring eingesetzt ist.

Der der Erfindung zugrundeliegende Gedanke wird in der nachfolgenden Beschreibung anhand eines Ausführungsbeispieles, das in der Zeichnung dargestellt ist, näher erläutert. Es zeigt:

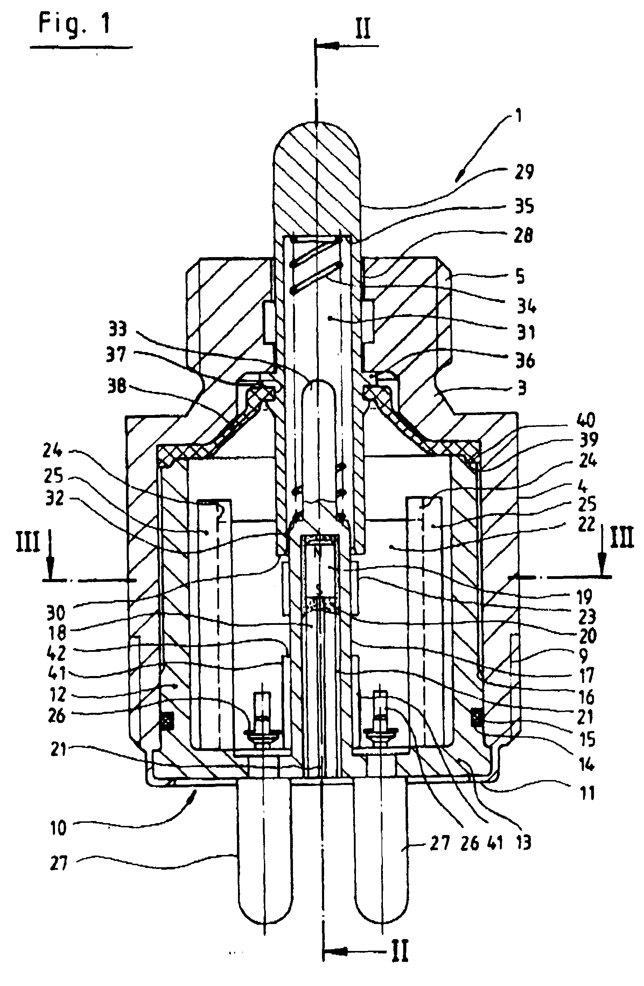

- Fig. 1: einen Längsschnitt durch einen elektrischen Schalter nach der Erfindung,

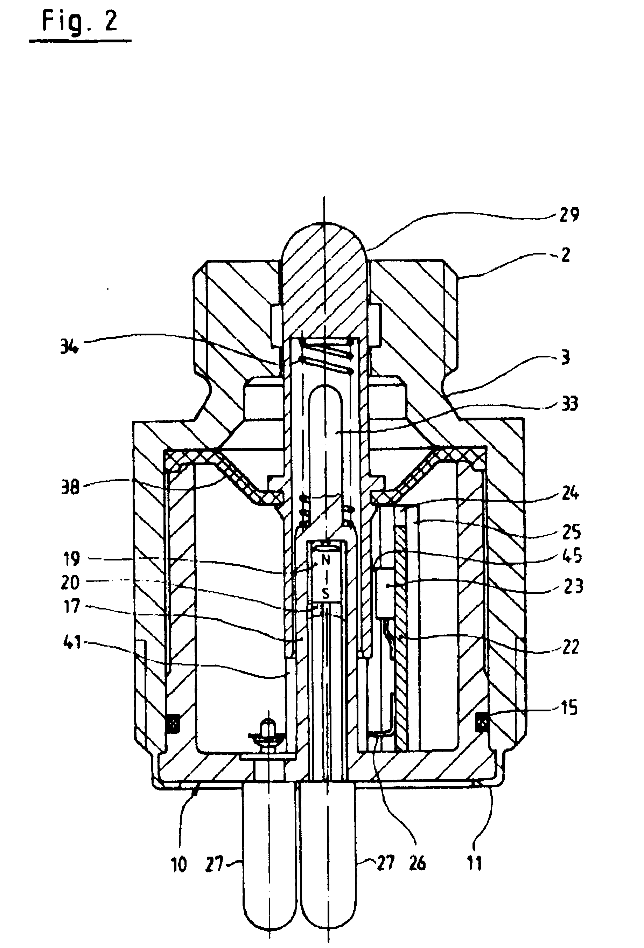

- Fig. 2: den Schalter nach Fig. 1 im betätigten Zustand gemäß der Linie II-II,

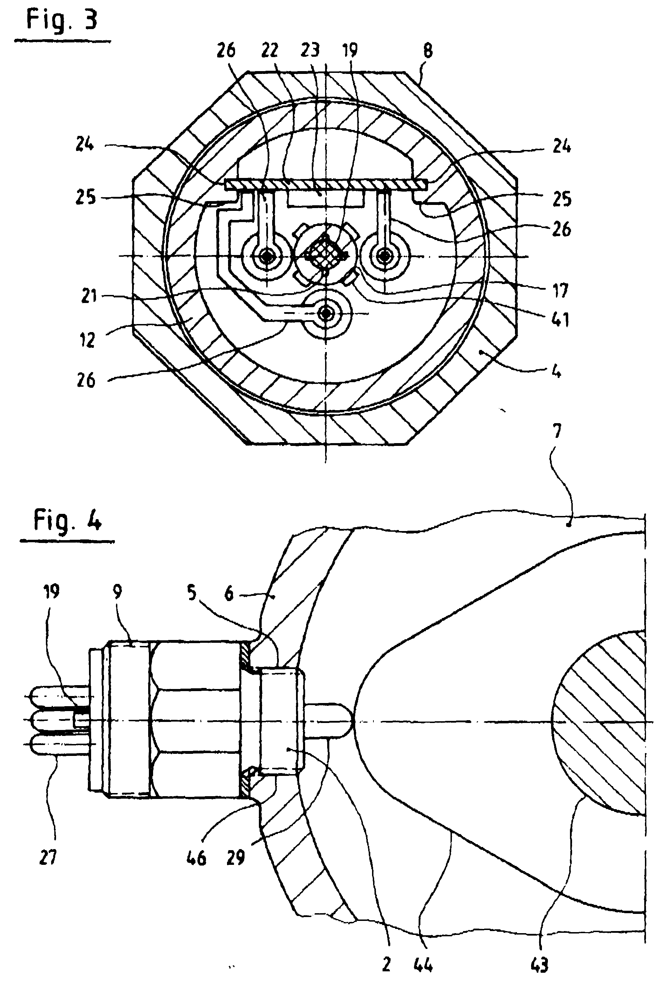

- Fig. 3: einen Schnitt durch den Schalter nach Fig. 1 gemaß der Linie III-III,
- Fig. 4: eine Ansicht eines in der Wandung eines Kraftfahrzeug-Getriebes eingeschraubten Schalters nach der Erfindung mit vormontiertem Magneten,
- Fig. 5: eine Detailansicht der Zuordnung von Schaltelement und Sockelschaft des Schalters nach Fig. 2, jedoch im unbetätigten Zustand des Betätigungsstößels und ohne eingesetzten Magneten,
- Fig. 6: die Darstellung nach Fig. 5 mit in den Wirkungsbereich des Schaltelementes verschobenen Betätigungsstößel,
- Fig. 7: die Darstellung nach Fig. 6 mit dem in den Sockelschaft eingesetzten Magneten und
- Fig. 8: die Darstellung nach Fig. 7 mit in die Ausgangsstellung gangsstellung zurückbewegtem Betätigungsstößel.

Der elektrische Schalter weist ein abgestuftes Gehäuse 1 auf, das sich einstückig aus einem Gehäusekopf 2, einem Gehäuseübergang 3 und einem Gehäusefuß 4 zusammensetzt. Auf dem Mantel des Gehäusekopfes 2 ist ein Gewinde 5 aufgearbeitet, mittels dessen der Schalter in die Wandung 6 eines Kraftfahrzeug-Getriebes 7 einschraubbar ist. Zur Erleichterung des Einschraubvorganges mit Hilfe eines Schraubenschlüssels ist der Gehäusefuß 4 außenseitig mit einem Achtkant 8 versehen, der sich vom Gehäuseübergang 3 aus über annäherund 2/3 der Länge des Gehäusefußes 4 erstreckt. An den Achtkant 8 schließt sich ein Außengewinde 9 zur Aufnahme einer Schutzkappe einer mit dem Schalter zu verbindenden Steckbuchse an. Der Gehäusefuß 4 nimmt einen topfförmigen Sockel 10 auf, der durch eine von der Unterseite des Gehäusefußes 4 ausgehende Umbördelung 11 in seiner Position gehalten ist. In der Außenseite der Wand 12 des Sockels 10 befindet sich in der Nähe des Bodens 13 eine umlaufende Ringnut 14 in die ein an der Innenseite des Gehäuefußes 4 anliegender Runddichtring 15 eingesetzt ist. Oberhalb der Ringnut 14 ist die Außenseite der Wand 12 des Sockels 10 über einen umlaufenden Absatz 16 zurückversetzt, um die Anlagefläche zwischen der Wand 12 des Sockels 10 und der Innenseite des Gehäusefußes 4 zu verrringern.

An den Boden 13 des Sockels 10 ist mittig ein vertikal sich nach innen erstreckender Schaft 17 angeformt, der mit einer sich durch den Boden 13 des Sockels 10 erstreckenden Sackhohrung 18 versehen ist. In den Endbereich der Sackbohrung 18 ist ein als Stabmagnet mit endseitiger Polarisierung ausgebildeter Permanentmagnet 19 eingesetzt, der in seiner Lage durch Klebstoff 20 fixiert ist. Der vor der Einführung des Permanentmagneten 19 in die Sackbohrung 18 eingefüllte Klebstoff kann sich während der Lagefestlegung des Permanentmagneten 19 aufgrund von vier gleichmäßig über den Umfang verteilten Längsnuten 21 der Sackbohrung 18 um den Permanentmagneten 19 herum verteilen. Der Klebstoff 20 schützt den Permanentmagneten 19 darüber hinaus vor Feuchtigkeit. Dem in dem Schaft 17 gehaltenen Permanentmagneten 19 liegt mit Abstand ein auf einer Leiterplatte 22 angeordnetes, als Hallgenerator ausgeführtes Schaltelement 23 gegenüber, das durch die Kraftlinien des Permanentmagneten beeinflußbar ist. Die Leiterplatte 22 ist seitlich in gegenüberliegende, durchgehende Nuten 24 zweier an der Wand 12 des Sockels 10 angeformter Längsvorsprünge 25 selbstklemmend eingeschoben. Die mit dem Schaltelement 23 gekoppelten Leiterbahnen der Leiterplatte 22 stehen über Kontaktschienen 26 mit sich durch den Boden 13 des Sockels 10 erstreckenden Anschlußkontakten 27 in Verbindung.

Der Gehäusekopf 2 nimmt in einer durchgehenden Axialbohrung 28 gleitbeweglich einen über die Oberseite des Gehäusekopfes 2 vorstehenden Betätigungsstößel 29 auf. Der axial zu dem Schaft 17 des Sockels 10 ausgerichtete Betätigungsstößel 29 weist von seiner Unterseite 30 her eine Sackbohrung 31 auf, in die der Oberbereich des Schaftes 17 eintaucht. Der obere Bereich des Schaftes 17 geht unter Bildung einer Ringschulter 32 in einen sich in den Betätigungsstößel 29 erstreckenden Führungszapfen 33 für eine Druckfeder 34 über. Diese Druckfeder 34 stützt sich einerseits an der Ringschulter 32 und andererseits an dem Boden 35 der Sackbohrung 31 ab. Die Aufwärtsbewegung des Betätigungsstößels 29 wird durch eine an diesem angeformte Ringschulter 36 begrenzt, die in der Ausgangsstellung des Betätigungsstößels 29 an der Innenseite des Gehäusekopfes 5 anliegt. Unterhalb der Ringschulter 36 befindet sich in dem Betätigungsstößel 29 eine Ringnut 37, die zur Aufnahme des Innenbereiches einer kreisringförmig gestalteten Rollmembrane 38 dient. Der Außenbereich der Rollmembrane 38 ist zwischen der Innenseite des Gehäuseübergangs 3 und der Oberseite der Wand 12 des Sockels 10 verspannt. Hierbei weist die Oberseite der Wand 12 des Sockels 10 außenseitig eine umlaufende Abstufung 39 auf, in die eine entsprechende Ringwulst 40 der Rollmembrane 38 eingreift. Zur Begrenzung der Abwärtsbewegung des Betätigungsstößels 29 sind vier gleichmäßig über den Umfang verteilte Stege 41 an der Außenseite des Schaftes 17 vom Boden 13 des Sockels 10 aus bis zu einer Höhe unterhalb des Schaltelementes 23 angeformt, wobei die Oberseite 42 der Stege 41 als Anschlag für die Unterseite 30 des Betätigungsstößels 29 dient.

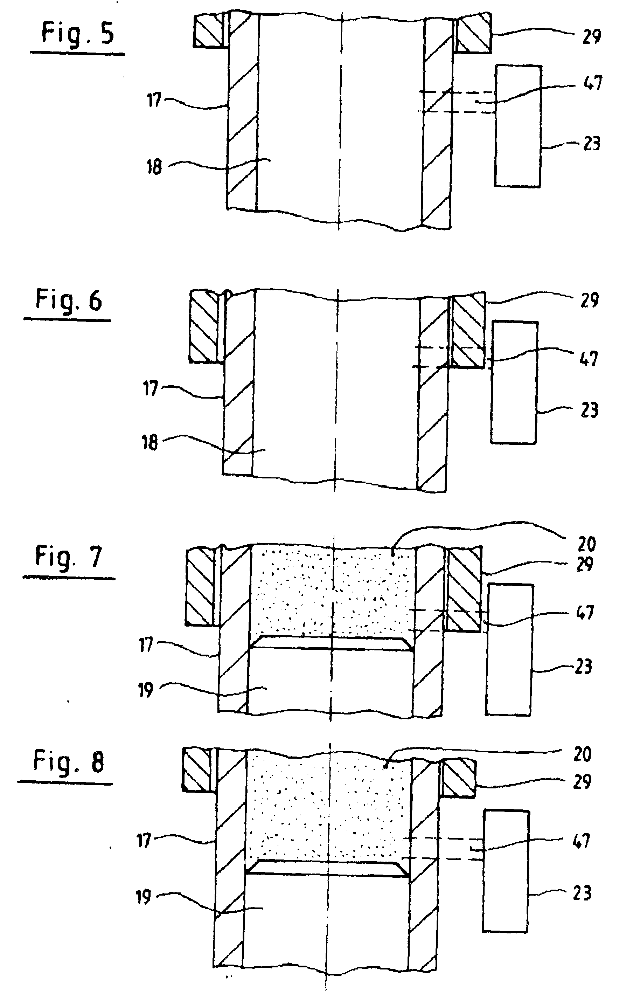

Der Schalter kann bei der Steuerung eines Starterkreislaufes einer Brennkraftmaschine für ein Fahrzeug mit einem Getriebe, das nur dann in Betrieb genommen werden darf, wenn das Getriebe eine Neutralstellung eingenommen hat, Anwendung finden. Hierzu wird der Schalter so an dem Getriebe 7 angeordnet, daß der Betätigungsstößel 29 aus ferromagnetischem Material über eine aus einer Nockenwelle 43 mit einem Schaltnocken 44 bestehende Schaltvorrichtung in den Freiraum 45 zwischen dem Permanentmagnetn 19 und dem Schaltelement 23 bewegt wird, und somit der zuvor unterbrochene Starterkreislauf durch das Schaltelement 23 geschlossen wird. Die Einstellung des Schaltpunktes wird hierbei wie folgt vorgenommen: Zunächst wird der mit einem vormontierten Permanentmagneten 19 ausgerüstete Schalter durch Einschrauben seines Gewindekopfes 2 in eine entsprechende Gewindebohrung 46 in der Wandung 6 des Getriebes 7 an diesem befestigt. In diesem Zustand des Schalters befindet sich das untere Ende des Betätigungsstößels 29 außerhalb des Wirkbereiches 47 des Schaltelementes 23 (vergl. Fig. 5). Anschließend wird der Schaltnocken 44 in Wirkverbindung mit dem Betätigungsstößel 29 gebracht, wodurch das untere Ende des Betätigungsstößels 29 in den Wirkbereich 47 des Schaltelementes 23 gelangt (vergl. Fig. 4, 6). Nunmehr wird der Permanentmagnet 19 aus seiner vormontierten Stellung, in der er durch Selbstklemmung und gegebenenfalls punktueller Klebung im Eingangsbereich der Sackbohrung 18 gehalten ist, soweit in die Sackbohrung 18 unter Durchbrechung der Siegelschicht des bereits vorher in die Sackbohrung 18 eingefüllten Klebstoffes 20 eingeschoben, bis das Schaltelement 23 seinen Schaltzustand ändert (vergl. Fig. 7). Darin wird der Schaltnocken 44 außer Eingriff mit dem Betätigungsstößel 29 gebracht, wodurch dieser seine Ausgangsstellung einnimmt (vergl. Fig. 8), aus der nunmehr eine genaue Reproduzierbarkeit der Schaltpunkte bezogen auf den Stößelhub gegeben ist. Somit berücksichtigt die Einstellung des Schaltpunktes alle Fertigungstoleranzen des Getriebes und des Schalters.

Die Erfindung ist nicht auf das dargestellte und beschriebene Ausführungsbeispiel beschränkt. Sie umfaßt im Rahmen des Schutzbereiches der Ansprüche auch alle fachmännischen Abwandlungen und Weiterbildungen der beschriebenen und/oder dargestellten Merkmale und Maßnahmen.

## Patentansprüche

1. Elektrischer Schalter mit einem in einem Gehäuse (1) federbelastet geführten Betätigungsstößel (29) und mit einem durch einen Permanentmagneten (19) berührungslos beaufschlagbaren Schaltelement (23), das mit sich durch einen in das Gehäuse (1) eingesetzten Sockel (10) erstreckenden Anschlußkontakten (27) verbunden ist, wobei der Permanentmagnet (19) und das Schaltelement (23) unter Bildung eines Freiraumes (45) zwischen denselben an dem Sockel (10) festgelegt sind, und der Betätigungsstößel (29) mit seinem unteren, aus einem ferromagnetischen Material bestehenden Bereich in diesen Freiraum (45) zur Änderung des Schaltzustandes des Schaltelementes (23) verschiebbar ist, dadurch gekennzeichnet, daß der Boden (13) des topfartig ausgeführten Sockels (10) mittig in einen Schaft (17) mit einer von außen zugänglichen Sackbohrung (18) übergeht, in der der als Stabmagnet mit endseitiger Polarisierung ausgebildete Permanentmagnet (19) mittels Klebstoff (20) in einer einmalig einstellbaren Position gehalten ist.

2. Elektrischer Schalter nach Anspruch 1, dadurch gekennzeichnet, daß die Sackbohrung (18) des Schaftes (17) mit vier gleichmäßig über den Umfang verteilten Längsnuten (21) versehen ist.

3. Elektrischer Schalter nach einem der Ansprüche 1 oder 2, dadurch gekennzeichnet, daß der Permanentmagnet (19) in einer vormontierten Stellung im Eingangsbereich der Sackbohrung (18) durch Selbstklemmung und/oder punktuelle Klebung gehalten ist, wobei in der Sackbohrung (18) der durch eine Siegelschicht abgedichtete Klebstoff (20) angeordnet ist.

4. Elektrischer Schalter nach einem der Ansprüche 1 bis 3, dadurch gekennzeichnet, daß das Schaltelement (23) als Hollgenerator, Reedschaltampulle oder dergleichen ausgeführt ist.

5. Elektrischer Schalter nach einem der Ansprüche 1 bis 4, dadurch gekennzeichnet, daß das Schaltelement (23) auf einer an dem Sockel (10) befestigten Leiterplatte (22) angeordnet ist, deren Leiterbahnen über Kontaktschienen (26) mit den Anschlußkontakten (27) verbunden sind.

6. Elektrischer Schalter nach Anspruch 5, dadurch gekennzeichnet, daß an der Innenseite der Wand (12) des Sockels (10) zwei gegenüberliegende Längsvorsprünge (25) mit jeweils einer durchgehenden Nut (24) angeformt sind, in die die Leiterplatte (22) eingeschoben ist.

7. Elektrischer Schalter nach den Ansprüchen 1 bis 6, dadurch gekennzeichnet, daß der Betätigungsstößel (29) von seiner Unterseite (30) her mit einer Sackbohrung (31) versehen ist, in die der obere Bereich des Schaftes (17) des Sockels (10) eintaucht.

8. Elektrischer Schalter nach den Ansprüchen 1 bis 7, dadurch gekennzeichnet, daß die Oberseite des Schaftes (17) unter Bildung einer Ringschulter (32) in einen Führungszapfen (33) für eine Druckfeder (34) übergeht, die sich mit ihrem einen Ende auf dieser Ringschulter (32) und mit ihrem anderen Ende an dem Boden (35) der Sackbohrung (31) des Betätigungsstößels (29) abstützt.

9. Elektrischer Schalter nach den Ansprüchen 1 bis 8, dadurch gekennzeichnet, daß an der Außenseite des Schaftes (17) vom Boden (13) des Sockels (10) aus vier gleichmäßig über den Umfang verteilte Stege (41) angeformt sind, deren Oberseite (42) unterhalb des Schaltelementes (23) liegt und als Anschlag für die Unterseite (30) des niedergedrückten Betätigungsstößels (29) dient.

10. Elektrischer Schalter nach einem der mehreren der Ansprüche 1 bis 9, dadurch gekennzeichnet, daß der in einer durchgehenden Axialbohrung (28) des Gehäuses (1) gleitbeweglich geführte Betätigungsstößel (29) eine Ringschulter (36) aufweist, die durch ihre Anlage an der Innenseite des Gehäuses (1) die Aufwärtsbewegung des Betätigungsstößels (29) begrenzt.

11. Elektrischer Schalter nach Anspruch 10, dadurch gekennzeichnet, daß unterhalb der Ringschulter (36) an dem Betätigungsstößel (29) eine Ringnut (37) vorgesehen ist, in die der Innenbereich einer kreisringförmigen Rollmembrane (38) eingreift, während der Außenbereich der Rollmembrane (38) zwischen der Oberseite der Wand (12) des Sockels (10) und der Innenseite des Gehäuses (1) festgelegt ist.

12. Elektrischer Schalter nach einem der Ansprüche 1 bis 11, dadurch gekennzeichnet, daß in der Nähe des Bodens (13) des Sockels (10) in die Außenseite der Wand (12) des Sockels (10) eine Ringnut (14) eingelassen ist, in die ein an der Innenseite des Gehäuses (1) anliegender Runddichtring (15) eingesetzt ist.

## Claims

1. Electrical switch, having an actuating push-rod (29) which is guided in a housing (1) in a spring-loaded manner, and having a switching element (23) which is actuatable in a contactless manner by a permanent magnet (19) and is connected to connection contacts (27), which extend through a support (10) inserted in the housing (1), the permanent magnet (19) and the switching element (23) being secured on the support (10) so as to form a space (45) between the permanent magnet and switching element, and the actuating push-rod (29) being displaceable into this space (45) with its lower region, which is formed from a ferromagnetic material, to change the switching state of the switching element (23), characterised in that the base (13) of the cup-shaped support (10) extends centrally into a shaft (17) having a blind bore (18), which is externally accessible and in which the permanent magnet (19), which is configured as a bar magnet having terminal polarisation, is retained in a one-time adjustable position by means of adhesive (20).

2. Electrical switch according to claim 1, characterised in that the blind bore (18) in the shaft (17) is provided with four longitudinal grooves (21), which are uniformly distributed over the circumference.

3. Electrical switch according to one of claims 1 or 2, characterised in that the permanent magnet (19) is retained in a pre-assembled position in the inlet region of the blind bore (18) by means of self-clamping and/or spot adhesion, the adhesive (20) being disposed in the blind bore (18) and being sealed by a sealing layer.

4. Electrical switch according to one of claims 1 to 3, characterised in that the switching element (23) is configured as a Hall generator, a Reed switching ampoule or the like.

5. Electrical switch according to one of claims 1 to 4, characterised in that the switching element (23) is disposed on a printed circuit board (22), which is mounted on the support (10) and has conductor paths which are connected to the connection contacts (27) via contact rails (26).

6. Electrical switch according to claim 5, characterised in that two oppositely situated longitudinal projections (25) are fitted on the innner surface of the wall (12) of the support (10) and each have a respective continuous groove (24), into which the printed circuit board (22) is inserted.

7. Electrical switch according to claims 1 to 6, characterised in that the actuatng push-rod (29) is provided, from its underside (30), with a blind bore (31) into which the upper region of the shaft (17) of the support (10) extends.

8. Electrical switch according to claims 1 to 7, characterised in that the upper side of the shaft (17) extends into a guide pin (33) for a compression spring (34) so as to form an annular shoulder (32), one end of said spring being supported on this annular shoulder (32) and the other end of said spring being supported on the base (35) of the blind bore (31) in the actuating push-rod (29).

9. Electrical switch according to claims 1 to 8, characterised in that four webs (41), which are uniformly distributed over the circumference, are fitted on the external surface of the shaft (17) from the base (13) of the support (10), the upper side (42) of said webs lying beneath the switching element (23) and serving as a stop means for the underside (30) of the pressed-down actuating push-rod (29).

10. Electrical switch according to one or more of claims 1 to 9, characterised in that the actuating push-rod (29), which is slidingly guided in an axial through-bore (28) in the housing (1), has an annular shoulder (36) which defines the upward movement of the actuating push-rod (29) as a result of its abutment against the internal surface of the housing (1).

11. Electrical switch according to claim 10, characterised in that an annular groove (37) is provided beneath the annular shoulder (36) on the actuating push-rod (29), the internal region of a circular roller diaphragm (38) engaging in said groove, while the external region of the roller diaphragm (38) is secured between the upper side of the wall (12) of the support (10) and the internal surface of the housing (1).

12. Electrical switch according to one of claims 1 to 11, characterised in that an annular groove (14) is provided in the external surface of the wall (12) of the support (10) in the vicinity of the base (13) of the support (10), an O-ring seal (15) being inserted in said groove and abutting against the internal surface of the housing (1).

## Revendications

1. Commutateur électrique comprenant un poussoir d'actionnement (29) guidé sous l'action d'un ressort dans un boîtier (1) et comprenant un élément de commutation (23) qui peut être sollicité sans contact par un aimant permanent (19) et qui est relié à des contacts de connexion (27) traversant un socle (10) logé dans le boîtier (1), l'aimant permanent (19) et l'élément de commutation (23) étant montés sur le socle (10) en formant entre eux un espace libre (45), et le poussoir d'actionnement (29) avec sa zone inférieure réalisée en matériau ferromagnétique étant coulissable dans cet espace libre (45) pour modifier l'état de commutation de l'élément de commutation (23), caractérisé en ce que le fond (13) du socle (10) réalisé en forme de pot se prolonge en son centre par une tige (17) pourvue d'un trou borgne (18) accessible de l'extérieur, dans lequel l'aimant permanent (19) conçu sous la forme d'un barreau aimanté à polarisation en bout est maintenu au moyen de colle (20) dans une position définie une fois pour toutes.

2. Commutateur électrique selon la revendication 1, caractérisé en ce que le trou borgne (18) de la tige (17) est pourvu de quatre rainures longitudinales (21) régulièrement réparties sur sa périphérie.

3. Commutateur électrique selon l'une des revendications 1 ou 2, caractérisé en ce que l'aimant permanent (19) est maintenu en position préassemblée dans la zone d'entrée du trou borgne (18) par serrage et/ou par un point de colle, la colle (20) étant étanché par une couche isolante dans le trou borgne (18).

4. Commutateur électrique selon l'une des revendications 1 à 3, caractérisé en ce que l'élément de commutation (23) est conçu sous la forme d'un générateur Hall, d'un contact à lame de contact ou analogue.

5. Commutateur électrique selon l'une des revendications 1 à 4, caractérisé en ce que l'élément de commutation (23) est disposé sur une plaque de circuit imprimé (22), fixée au socle (10), dont les rubans conducteurs sont reliés aux contacts de connexion (27) par des rails de contact (26).

6. Commutateur électrique selon la revendication 5, caractérisé en ce que sur la face intérieure de la paroi (12) du socle (10) sont moulées deux saillies longitudinales en vis-à-vis (25) qui comportent chacune une rainure continue (24) et dans lesquelles est insérée la plaque de circuit imprimé (22).

7. Commutateur électrique selon les revendications 1 à 6, caractérisé en ce que le poussoir d'actionnement (29) comporte un trou borgne (31) depuis sa face inférieure (30) dans lequel pénètre la zone supérieure de la tige (17) du socle (10).

8. Commutateur électrique selon les revendications 1 à 7, caractérisé en ce que la face supérieure de la tige (17) se prolonge, en formant un épaulement annulaire (32), par un téton de guidage (33) pour un ressort de pression (34) dont l'une des extrémités prend appui sur cet épaulement annulaire (32) et dont l'autre extrémité prend appui sur le fond (35) du trou borgne (31) du poussoir d'actionnement (29).

9. Commutateur électrique selon les revendications 1 à 8, caractérisé en ce que sur la face extérieure de la tige (17) sont moulées, à partir du fond (13) du socle (10), quatre nervures (41) régulièrement réparties sur la périphérie, dont la face supérieure (42) se trouve en dessous de l'élément de commutation (23) et sert de butée pour la face inférieure (30) du poussoir d'actionnement (29) lorsqu'il est enfoncé.

10. Commutateur électrique selon l'une des revendications 1 à 9, caractérisé en ce que le poussoir d'actionnement (29) guidé de manière glissante dans un trou axial débouchant (28) du boîtier (1) comporte un épaulement annulaire (36) qui, par son contact avec la face intérieure du boîtier (1), limite le mouvement ascendant du poussoir d'actionnement (29).

11. Commutateur électrique selon la revendication 10, caractérisé en ce qu'au-dessous de l'épaulement annulaire (36) est prévue, sur le poussoir d'actionnement (29), une rainure annulaire (37), dans laquelle pénètre la zone intérieure d'un diaphragme roulant annulaire (38), tandis que la zone extérieure du diaphragme roulant (38) est immobilisée entre la face supérieure de la paroi (12) du socle (10) et la face intérieure du boîtier (1).

12. Commutateur électrique selon l'une des revendications 1 à 11, caractérisé en ce qu'à proximité du fond (13) du socle (10) est pratiquée, dans la face extérieure de la paroi (12) du socle (10), une rainure annulaire (14), dans laquelle est logé un joint torique (15) appliqué contre la face intérieure du boîtier (1).
